(19) Europäisches Patentamt
European Patent Office
Office européen des brevets

(11) Veröffentlichungsnummer : **0 039 439**
**B1**

(12) **EUROPÄISCHE PATENTSCHRIFT**

(45) Veröffentlichungstag der Patentschrift : **07.12.83**

(21) Anmeldenummer : **81102984.2**

(22) Anmeldetag : **18.04.81**

(51) Int. Cl.³ : **C 09 B 67/06**, C 09 B 67/54, C 09 B 67/24, C 09 B 67/32, D 06 L 3/12

(54) **Verfahren zur Herstellung salzarmer wasserlöslicher Farbstoffe.**

(30) Priorität : **03.05.80 DE 3017070**

(43) Veröffentlichungstag der Anmeldung : **11.11.81 Patentblatt 81/45**

(45) Bekanntmachung des Hinweises auf die Patenterteilung : **07.12.83 Patentblatt 83/49**

(84) Benannte Vertragsstaaten : **CH DE FR GB LI**

(56) Entgegenhaltungen :
**FR-A- 2 091 177**
**US-A- 3 431 130**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Nonn, Konrad, Dr.**
**Otto-Stange-Strasse 17**
**D-5090 Leverkusen 1 (DE)**
Erfinder : **Laser, Joachim, Dr.**
**Rybniker Strasse 2**
**D-5000 Köln 80 (DE)**
Erfinder : **Wolf, Karlheinz, Dr.**
**Paul-Klee-Strasse 77**
**D-5090 Leverkusen 1 (DE)**
Erfinder : **Hörnle, Reinhold, Dr.**
**Hufelandstrasse 42**
**D-5000 Köln 80 (DE)**
Erfinder : **Istel, Erich, Dr.**
**Friedrich-Ebert-Strasse 3**
**D-4047 Dormagen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 039 439 B1

Verfahren zur Herstellung salzarmer wasserlöslicher Farbstoffe

Die Erfindung betrifft ein Verfahren zur Herstellung von salzarmen wasserlöslichen Farbstoffen, das dadurch gekennzeichnet ist, daß man die wasserlöslichen Farbstoffe aus ihren wäßrigen Lösungen und/oder Dispersionen durch Zugabe von Salzen, die bei Temperaturen von etwa 40 °C bis etwa 250 °C, und bei einem Druck von etwa 10 Torr bis etwa 760 Torr flüchtig sind, aussalzt, die Farbstoffe isoliert und die flüchtigen Salze beim Trocknungsprozeß verflüchtigt.

Im Vergleich zu den üblichen Verfahren, bei denen die Farbstoffe mit nicht flüchtigen Salzen wie NaCl, $Na_2SO_4$ usw. ausgesalzen werden, erhält man nach dem erfindungsgemäßen Verfahren praktisch salzfreie Farbstoffe, die in Wasser und/oder organischen Medien wesentlich besser löslich sind als die salzhaltigen Farbstoffe.

Geeignete wasserlösliche Farbstoffe sind anionische und kationische Farbstoffe, deren Absorptionsmaximum im sichtbaren und ultravioletten Bereich des Spektrum liegt.

Als anionische Farbstoffe kommen z. B. Farbstoffe infrage, die als wasserlöslich machende Gruppe die COOH-Gruppe bevorzugt aber die $SO_3H$-Gruppe oder deren Salze enthalten wie z. B. Phthalocyanin-, Nitro-, Di- oder Triaryl-methan-, Oxazin-, Thiazin-, Dioxazin-, Xanthen- Anthrachinon- und Azofarbstoffe sowie sulfogruppenhaltige und sulfogruppenfreie 1 : 1- oder insbesondere 1 : 2-Metallkomplexfarbstoffe, wie 1 : 1-Nickelkomplexe, 1 : 1-Kobaltkomplexe, 1 : 1-Kupferkomplexe, 1 : 1-Chromkomplexe oder symmetrische oder asymmetrische 1 : 2-Kobaltkomplexe oder 1 : 2-Chromkomplexe von insbesondere o-Carboxy-o'-hydroxy- oder o,o'-Dihydroxyazofarbstoffen des Benzol-azo-benzol-, Naphthalin-azo-naphthalin-, Benzo-azo-naphtalin-, Benzo-azo-pyrazol- oder Benzo-azo-acetessigsäureamid-Typs.

Die Farbstoffe können auch faserreaktive Gruppen enthalten. Weiterhin einsetzbar sind anionische optische Aufheller beispielsweise solche der Stilbenreihe.

Bei den wasserlöslichen kationischen Farbstoffen handelt es sich um solche, welche ein farbiges Kation und ein farbloses Anion besitzen. Geeignete kationische Farbstoffe sind solche der Methin- oder Azomethinreihe, ferner Azofarbstoffe, die einen Indolinium-, Pyrazolium-, Imidazolium-, Thiazolium-, Tetrazolium-, Oxdiazolium-, Thiadiazolium-, Oxazolium-, Diazolium-, Pyridinium-, Pyrimidinium- oder Pyrazinium-Ring enthalten.

Die genannten Heterocyclen können gegebenenfalls substituiert und mit aromatischen Ringen anelliert sein. Weiterhin kommen kationische Farbstoffe der Diarylmethan-, Triarylmethan-, Oxazin- und Thiazinreihe in Frage sowie Azo- und Anthrachinonfarbstoffe mit externen Ammoniumgruppen.

Ein großer Teil dieser Farbstoffe wird im Colour Index (3rd Edition ; published by The Society of Dyers and Colourists) unter Acid Dyes, Direct Dyes, Basic Dyes, Mordant Dyes and Reactive Dyes beschrieben.

Als flüchtige Salze werden vorzugsweise Ammoniumsalze, und zwar solche, die am Ammoniumstickstoffatom noch mindestens ein H-Atom tragen, eingesetzt. Bevorzugte Verwendung finden Salze, welche das $NH_4^{\oplus}$-ion enthalten.

Als Beispiele für erfindungsgemäß einsetzbare Ammoniumverbindungen seien genannt :

Ammoniumbenzoat, Ammoniumoxalat, Ammoniumhydrogensulfat, Ammoniumsulfat, Ammoniumchlorid, Ammoniumbromid, Ammoniumfluosilicat.

Bevorzugte Verwendung finden Ammoniumcarbonat, Ammoniumhydrogencarbonat und Ammoniumcarbamat.

Nach dem erfindungsgemäßen Verfahren werden die wasserlöslichen Farbstoffe nach ihrer Herstellung im wäßrigen oder vorwiegend wäßrigen Medium, das auch wasserlösliche Lösungsmittel enthalten kann, durch Zugabe der flüchtigen Salze ausgesalzen, durch Abpressen oder Absaugen nach üblichem Verfahren isoliert und anschließend bei Temperaturen getrocknet, die so hoch sind, daß sich das Salz verflüchtigt.

In einer speziellen Ausführungsform des Verfahrens werden die wie bislang üblich mit nichtflüchtigen Salzen wie NaCl oder $Na_2SO_4$ ausgesalzenen Farbstoffe isoliert, der stark salzhaltige Farbstoff wieder in Wasser aufgelöst und erneut durch Zugabe der flüchtigen Salze ausgesalzen, durch Abpressen oder Absaugen nach üblichen Verfahren isoliert und anschließend bei Temperaturen, die so hoch sind, daß sich das Salz verflüchtigt, getrocknet.

Als Trockenaggregate kommen z. B. Umluftschränke, kontinuierliche oder diskontinuierliche Schaufeltrockner, Walzentrockner oder Bandtrockner infrage. Die Trocknung kann unter Normaldruck oder bei vermindertem Druck durchgeführt werden. Die Trockentemperatur beträgt 40 °C-250 °C, vorzugsweise 60 °C-150 °C, bei einem Druck von etwa 10 Torr bis etwa 760 Torr.

Man erhält nach dem Trockenprozeß Farbstoffe, die nicht mehr durch Salze verunreinigt sind. Die kationischen Farbstoffe enthalten als Anion vorzugsweise das Anion des flüchtigen Salzes, die anionischen Farbstoffe als Kation vorzugsweise das Kation des flüchtigen Salzes.

Die salzfreien Farbstoffe zeichnen sich durch gute Löslichkeit in Wasser und organischen Lösungsmitteln aus.

Sie eignen sich zur Herstellung von konzentrierten Farbstofflösungen, zur Einfärbung von Kunststoffen in der Masse und besonders zur Spinnfärbung von Kunstfasern wie z. B. PA-Fasern. Durch die Salzfreiheit wird eine Verstopfung der Spinndüsen oder ein Ausblühen der Salze vermieden.

Anionische Farbstoffe, die nach diesem Verfahren ein Ammoniumkation enthalten, können in wäßrigen oder organischen Medien durch Zugabe von stärkerer Base sehr leicht in das Salz der stärkeren Base überführt werden. So kann man beispielsweise aus dem Ammoniumsalz eines Farbstoffes durch Zugabe von LiOH unter Verflüchtigung von $NH_3$ das Li-Salz herstellen.

Beispiel 1

100 g eines Gemisches bestehend aus 70 % des substantiven gelben Farbstoffs der Formel

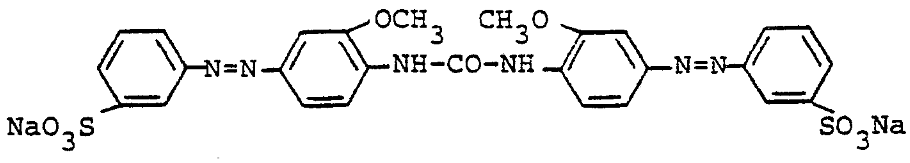

und 30 % Natriumchlorid, wie es bei der technischen Synthese anfällt, wird bei 50 °C in 1 400 ml weichem Waser gelöst. Durch portionsweises Eintragen von 225 g Ammoniumcarbonat wird der Farbstoff ausgefällt. Der Farbstoff wird abfiltriert und mit einer Lösung von 30 g Ammoniumcarbonat in 200 ml weichem Wasser gewaschen. Der feuchte Filterkuchen wird bei 100 °C getrocknet. Man erhält 71 g eines gelb-braunen Pulvers, das zu 98 % Farbstoff und 2 % Natriumchlorid enthält. Die Fällung des Farbstoffs mit Ammoniumcarbonat kann auch direkt aus der Reaktionslösung, wie sie bei der Farbstoffsynthese anfällt erfolgen.

Löst man 18 g des salzarmen Farbstoffs in einem Gemisch bestehend auf 39 ml weichem Wasser, 15 g Diethylenglykol und 28 g eines Umsetzungsproduktes von Triethanolamin mit Ethylenoxid, dessen Herstellung in DE-A 2 341 293 als Amin 2 beschrieben ist, und erhitzt 1 Stunde unter Rühren auf 80 °C, so wird eine Farbstofflösung erhalten, aus der bei 0 °C gelagert kein Farbstoff auskristallisiert.

Beispiel 2

100 g eines Gemisches bestehend aus 85 % des blauen Reaktivfarbstoffs 1-Amino-4-[2'-methyl-3'(2'', 4''-difluor-5''-chlor-6''-pyrimidinylamino)-phenylamino]-anthrachinon-2,5'-disulfonsaures-Natrium und 15 % Natriumchlorid, wie es bei der technischen Synthese anfällt, wird bei 50 °C unter Rühren in 900 ml weichem Wasser gelöst. Durch portionsweises Eintragen von 125 g festem Ammoniumhydrogencarbonat wird der Farbstoff ausgefällt. Der Farbstoff wird abfiltriert und mit einer Lösung von 25 g Ammoniumhydrogencarbonat in 200 ml weichem Wasser gewaschen.

Der feuchte Filterkuchen wird bei 80 °C bis zur Gewichtskonstanz getrocknet. Man erhält 84 g eines blau-schwarzen Pulvers, das aus 99,1 % Farbstoff und 0,9 % Natriumchlorid besteht. Wiederholt man den beschriebenen Vorgang erneut, so sinkt der Natriumchloridgehalt unter 0,1 %. Die Fällung des Farbstoffs mit Ammoniumhydrogencarbonat kann auch direkt aus der Reaktionslösung, wie sie bei der Farbstoffsynthese anfällt, erfolgen.

20 g des nahezu salzfreien Farbstoffs können unter Zusatz von 20 g ε-Caprolactam in 60 ml Wasser gelöst werden. Aus dieser Lösung kristallisiert bei 0 °C kein Farbstoff.

Der 15 % Natriumchlorid enthaltende Farbstoff kann nach obenstehender Rezeptur bei Raumtemperatur nicht vollständig gelöst werden.

Beispiel 3

100 g eines Gemisches bestehend auf 91 % des roten Chromkomplexfarbstoffs der Formel

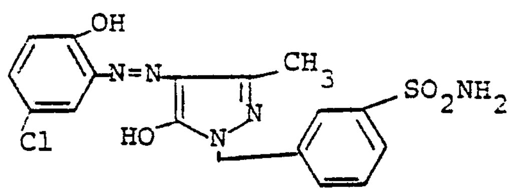

1 : 2 Chromkomplex

und 9 % Natriumchlorid werden bei 50 °C in 2 500 ml weichem Wasser gelöst. Durch portionsweises Eintragen von 250 g Ammoniumcarbonat wird der Farbstoff nahezu vollständig ausgefällt. Der Farbstoff wird abfiltriert und bei 100 °C getrocknet. Man erhält 90 g eines roten Pulvers, das aus 99,2 % Farbstoff und 0,8 % Natriumchlorid besteht.

Wiederholt man den beschriebenen Vorgang erneut, so sinkt der Natriumchloridgehalt unter 0,1 %. Der zweimal mit Ammoniumcarbonat umgefällte Farbstoff löst sich ohne Rückstand in Dimethylformamid. Erhitzt man eine Lösung von 44,05 g des salzarmen Farbstoffs in 500 ml weichem Wasser unter

Zusatz von 2,1 g Lithiumhydroxid · 1 $H_2O$ 1 Stunde unter Rückfluß, so entweicht Ammoniak.

Nach dem Eindampfen des Wassers erhält man 46 g eines roten Pulvers, das weitgehend aus dem Lithiumsalz des Chromkomplexfarbstoffs besteht.

2 % dieses Farbstoff-Lithium-Salzes lösen sich ohne Rückstand in geschmolzenem ε-Caprolactam. Ein derart gefärbtes ε-Caprolactam kann problemlos versponnen werden.

Beispiel 4

100 g eines Gemisches bestehend aus 89 % des Säurefarbstoffs Colour Index: Acid Blue 83, Nr. 42660 und 11 % Natriumchlorid, wie es bei der technischen Synthese anfällt, wird bei 50 °C in 900 ml weichem Wasser zwei Stunden gerührt. Der Farbstoff ist nur teilweise gelöst. Durch Zusatz von verdünnter Essigsäure wird der pH-Wert 6,5 eingestellt.

Anschließend werden 100 g Ammoniumhydrogencarbonat portionsweise eingetragen und nach 30 Minuten wird der nahezu vollständig ausgefällte Farbstoff abfiltriert und mit einer Lösung von 20 g Ammoniumhydrogencarbonat in 200 ml weichem Wasser gewaschen.

Nach dem Trocknen bei 100 °C werden 85 g eines blauschwarzen Pulvers, das 98,5 % Farbstoff und 1,5 % Natriumchlorid enthält, erhalten. Wiederholt man den beschriebenen Vorgang, so sinkt der Natriumchloridgehalt unter 0,2 %.

Ausgehend von dem nahezu salzfreien Farbstoff kann eine stabile Lösung bestehend aus 5 g Farbstoff, 30 g Diethylenglykol un 65 ml Wasser hergestellt werden. Diese Lösung führt in Faserschreibern verwendet nicht zu Verkrustungen der Faserspritze durch Natriumchloridkristalle.

**Ansprüche**

1. Verfahren zur Herstellung von salzarmen wasserlöslichen Farbstoffen, dadurch gekennzeichnet, daß man die wasserlöslichen Farbstoffe aus ihren wäßrigen Lösungen und/oder Dispersionen durch Zugabe von Salzen, die bei Temperaturen von etwa 40 °C bis etwa 250 °C, bei einem Druck von etwa 10 Torr bis etwa 760 Torr, flüchtig sind, aussalzt, die Farbstoffe isoliert und die flüchtigen Salze beim Trockenprozeß verflüchtigt.

2. Verfahren, gemäß Anspruch 1, dadurch gekennzeichnet, daß man die wasserlöslichen Farbstoffe durch Zugabe von Salzen, die bei Temperaturen von etwa 60 °C bis etwa 150 °C, bei einem Druck von etwa 10 Torr bis etwa 760 Torr, flüchtig sind, aussalzt.

3. Verfahren gemäß Anspruch 1 und 2, dadurch gekennzeichnet, daß man flüchtige Ammoniumsalze, die am Ammoniumstickstoffatom noch mindestens ein H-Atom tragen, einsetzt.

4. Verfahren gemäß Anspruch 1 und 2, dadurch gekennzeichnet, daß man flüchtige $NH_4^{\oplus}$-Salze einsetzt.

5. Verfahren gemäß Anspruch 1, dadurch gekennzeichnet, daß man Ammoniumcarbonat einsetzt.

6. Verfahren gemäß Anspruch 1, dadurch gekennzeichnet, daß man Ammoniumcarbamat einsetzt.

7. Verfahren gemäß Anspruch 1, dadurch gekennzeichnet, daß man Ammoniumhydrogencarbonat einsetzt.

8. Verfahren nach Anspruch 4-7, dadurch gekennzeichnet, daß man anionische Farbstoffe, die ein $NH_4^{\oplus}$-Kation enthalten, durch Zugabe von stärkeren Basen unter Verflüchtigung von $NH_3$ in das Salz der stärkeren Base überführt.

**Claims**

1. Process for the preparation of water-soluble dyestuffs with a low salt content, characterised in that the water-soluble dyestuffs are salted out from their aqueous solutions and/or dispersions by adding salts which are volatile at temperatures of about 40 °C to about 250 °C and under a pressure of about 10 mm Hg to about 760 mm Hg, the dyestuffs are isolated and the volatile salts are volatilised during the drying process.

2. Process according to Claim 1, characterised in that the water-soluble dyestuffs are salted out by adding salts which are volatile at temperatures of about 60 °C to about 150 °C under a pressure of about 10 mm Hg to about 760 mm Hg.

3. Process according to Claim 1 and 2, characterised in that volatile ammonium salts which still carry at least one H atom on the ammonium nitrogen atom are employed.

4. Process according to Claim 1 and 2, characterised in that volatile $NH_4^{\oplus}$ salts are employed.

5. Process according to Claim 1, characterised in that ammonium carbonate is employed.

6. Process according to Claim 1, characterised in that ammonium carbamate is employed.

7. Process according to Claim 1, characterised in that ammonium bicarbonate is employed.

8. Process according to Claims 4-7, characterised in that anionic dyestuffs which contain a $NH_4^{\oplus}$ cation are converted, by adding stronger bases, into the salt of the stronger base, with volatilisation of $NH_3$.

**Revendications**

1. Procédé de production de colorants hydrosolubles contenant peu de sels, caractérisé en ce qu'on relargue les colorants hydrosolubles dans leurs solutions et/ou dispersions aqueuses par addition de sels qui sont volatils à des températures d'environ 40 à environ 250 °C, à une pression d'environ 10 torrs à environ 760 torrs, on isole les colorants et on volatilise les sels volatils lors de l'opération de séchage.

2. Procédé suivant la revendication 1, caractérisé en ce qu'on relargue les colorants hydrosolubles par addition de sels qui sont volatils à des températures d'environ 60 à environ 150 °C, à une pression d'environ 10 torrs à environ 760 torrs.

3. Procédé suivant les revendications 1 et 2, caractérisé en ce qu'on utilise des sels d'ammonium volatils qui portent sur l'atome d'azote d'ammonium encore au moins un atome d'hydrogène.

4. Procédé suivant les revendications 1 et 2, caractérisé en ce qu'on utilise des sels de $NH_4^{\oplus}$ volatils.

5. Procédé suivant la revendication 1, caractérisé en ce qu'on utilise le carbonate d'ammonium.

6. Procédé suivant la revendication 1, caractérisé en ce qu'on utilise le carbamate d'ammonium.

7. Procédé suivant la revendication 1, caractérisé en ce qu'on utilise le bicarbonate d'ammonium.

8. Procédé suivant les revendications 4-7, caractérisé en ce qu'on transforme des colorants anioniques qui contiennent un cation $NH_4^{\oplus}$, par addition de bases plus fortes, avec volatilisation de $NH_3$, en le sel de la base plus forte.